# EUROPEAN PATENT SPECIFICATION

(11) **EP 1 838 579 B1**
(45) Date of publication and mention of the grant of the patent: **21.07.2010**
(21) Application number: 05825286.7
(22) Date of filing: 19.12.2005
(51) Int. Cl.: B65B 51/14, B65B 19/22, B29C 65/18

(54) **MULTI-STAGE HEATER PLATES FOR SEALING AND SHRINKING OVERWRAP**
MEHRSTUFIGE HEIZPLATTEN ZUM SIEGELN UND SCHRUMPFEN EINER UMVERPACKUNG
PLAQUES CHAUFFANTES A PLUSIEURS ETAGES POUR SOUDER ET RETRACTER UN SUREMBALLAGE

(30) Priority: 22.12.2004 US 19576
(43) Date of publication of application: 03.10.2007
(73) Proprietor: Philip Morris Products S.A., 2000 Neuchâtel (CH)
(72) Inventor: WILDER, Duane, C., Chesterfield, VA 23832 (US); RECH, William, J., Midlothian, VA 23113 (US)
(74) Representative: Millburn, Julie Elizabeth
(86) International application number: PCT/IB2005/004011
(87) International publication number: WO 2006/067624

(56) References cited:
- EP-A- 1 103 465
- DE-A1- 3 824 924
- GB-A- 605 899
- GB-A- 2 179 018
- US-A- 3 166 462

## Description

### Background of the Invention

The disclosed invention relates to a method and apparatus for manufacturing packages sealed with a wrapper. It is conventional in the art of packaging, particularly the art of cigarette packaging, to wrap the final package in shrink wrap film to maintain freshness and to serve as a tamper seal. Heat is applied to shrink the film enclosing the cigarette package.

Conventional packages, such as those used for cigarettes, comprise an outer container or pack which consists of paper in the case of "soft" packs, or of a cardboard box in the case of "hard" packs. The pack is then sealed by covering it with a substantially airtight material, the overlapping edges of which are bonded or heat-sealed together. There is a need and desire in the art for a wrapped package with improved non-melted end-fold seals and overall film tightness.

U.S. Patent 4,887,408 to Mattei et al. teaches a conventional method for sealing the ends of product wrapping. The package is loaded into a drum with the wrapping covering three sides of the package in a U-shaped fashion. Heaters contact the packages on the side facing away from the drum. The heaters bond the two sides of the wrapping material together to seal the sides of the package in a sheath-like manner. The ends of the wrapping material are folded to enclose the packages. Packages are then conveyed through three heating stations to seal the top and bottom ends of the packages by fusing the folded wrapping material upon itself.

U.S. Patent 4,330,977 to Focke also teaches using heating elements for sealing packages. Separated heating elements allow different sealing temperatures to be used.

U.S. Patent 5,477,661 to Draghetti teaches loading cigarette packs onto a drum and heating at a low temperature for a long time to seal packages.

EP-A-1 103 465 discloses a process for producing packs made of thin cardboard with an outer wrapper made of shrink-wrap film in which folding tabs of the outer wrapper are connected to one another by full-surface-area heating. Prior to the full-surface-area sealing operation, the folding tabs are connected to one another by a tack seal, with small, limited sealing surface areas. The packs with the finished and sealed outer wrapper are then subjected to a shrink wrapping treatment.

US-A-3,166,462 discloses methods and apparatus to weld and heat seal the end folds of a thermoplastic wrapper envelope. The envelope is conducted to a first heating zone at which heat is applied to the fold-carrying parts of the envelope to initiate welding of the folds. Thereafter, the envelope is conducted to a second heating zone at which pressure is applied to the laminations of the envelope with the simultaneous transfer of additional heat to the laminations to complete the welding.

It is conventional to use heater blocks with an "H" pattern (such as used by G.D. Societa' per Azioni) and with a rectangular pattern (such as used by Focke & Co.) for sealing. In these two designs, the operator must reduce the temperature to avoid melting the single folds which cannot withstand the high temperatures and relatively long periods required to heat the multiple folds. The areas where the folds are five layers thick thereby suffer from insufficient heating.

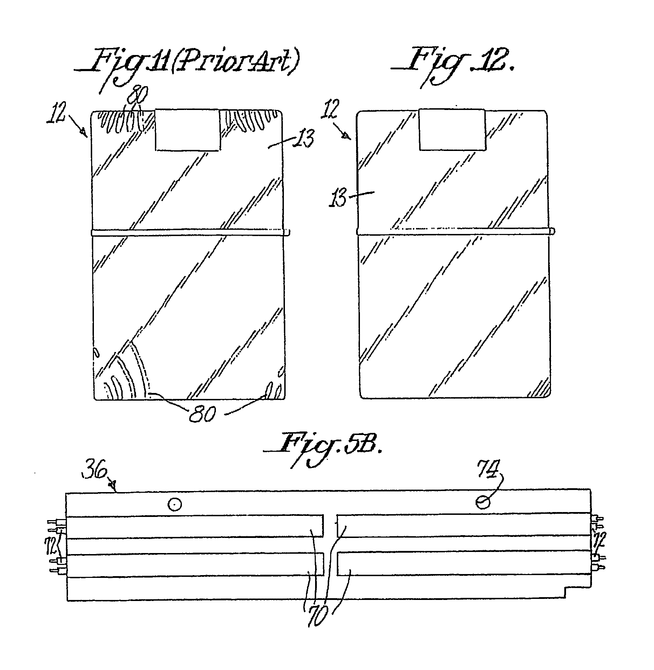

In addition to having wrapping that is insufficiently sealed or, in the other extreme, melted, the conventional finished product has wrinkles **80** as show in Fig. **11****.**

It has therefore been discovered that current apparatuses and methods are incapable of producing uniform, unwrinkled packages with a reliable end fold seal.

It is therefore an object of the invention to provide a method and apparatus for manufacturing a wrapper that will improve end fold sealing and improve the overall appearance of the wrap. Yet another object of the invention is to manage heat input into the poly wrap to increase shrinkage, yet preventing melting. It is also an object of the invention to improve heat input using multiple separate controllers. The multiple stage heater according to the present invention achieves these objectives.

### Summary of the Invention

According to the present invention there is provided a heating plate for packaging comprising: a first stage that comprises a flat surface for contacting wrapping that is folded around packages to preheat the wrapping along folded edges; a second stage that comprises first recessed areas and first non-recessed areas, wherein the first non-recessed areas comprise four surfaces for contacting the wrappings of two packages at points where the largest bulk of the wrappings are folded upon themselves to tack the wrappings; a third stage that comprises second recessed areas and second non-recessed areas, wherein the second non-recessed areas comprise two contiguous H-shaped surfaces for contacting the wrappings of two packages along folded edges of the wrappings to seal the wrappings; and a fourth rectangular shaped stage that comprises third recessed areas and third non-recessed areas, wherein the third non-recessed areas comprise four trapezoidal shaped surfaces for contacting the wrappings of two packages along folded edges of the wrappings to shrink the wrappings.

A package that has been enveloped in a film is sealed using a multiple stage heater. The heater of the present invention decouples the sealing into various stages to provide more uniform heat to package wrapping, particularly shrink wrapping, while avoiding melting.

According to the invention there is also provided a heating apparatus for use in cigarette packaging comprising: a heating area comprising a multiple stage heating plate according to the invention; a first reciprocating device that advances a set of cigarette packs linearly through the heating area and along multiple stages of the multiple stage heating plate; and a second reciprocating device that moves the multiple stage heating plate inwardly to contact the set of cigarette packs and outwardly to allow the set of cigarettes packs to be moved through the heating area.

According to the invention there is further provided a method of sealing and shrinking a wrapping material around packages comprising: contacting the wrapping material with a first heating stage to preheat the wrapping material along folded edges; contacting the wrapping material with a second heating stage to tack the wrapping material; contacting the wrapping material with a third heating stage to seal the wrapping material around the packages; and contacting the wrapping material with a fourth heating stage to shrink the wrapping material, wherein the four heating stages are one heating plate.

Those skilled in the art will appreciate the above stated advantages and other advantages and benefits of various embodiments of the invention upon reading the following detailed description of the embodiments with reference to the below-listed drawings.

### Brief Description of the Drawings

Novel features and advantages of the present invention in addition to those noted above will be become apparent to persons of ordinary skill in the art from a reading of the following detailed description in conjunction with the accompanying drawings wherein similar reference characters refer to similar parts and in which:
Fig. **1** shows a schematic top plan view of a portion of a cigarette packaging apparatus;
Fig. **2** shows a side elevational view of the loading passage and heating area of the cigarette packaging apparatus of Figure **1** during a first step of operation;
Fig. **3** shows a side elevational view of the loading passage and heating area of the cigarette packaging apparatus of Figure **1** during a second step of operation;
Fig. **4** shows a front elevational view of a heater block that contacts the cigarette packs in accordance with a preferred embodiment of the invention;
Fig. **5A** shows a rear elevational view of the heater block shown in Fig. **4****;**
Fig. **5B** shows a rear side elevational view of an alternative embodiment of a heater block in accordance with the preferred embodiment of the invention;
Fig. **6** shows a cross sectional plan view of the heater block taken along line **6-6** of Figure **4****;**
Figs. **7-10** show cigarette packs with the areas in phantom representing the areas contacted by the heater block illustrated in Figure **4****;**
Fig. **11** shows a cigarette pack of the prior art; and
Fig. **12** shows a cigarette pack with a smooth outer wrapping according to the invention.

### Detailed Description of a Preferred Embodiment

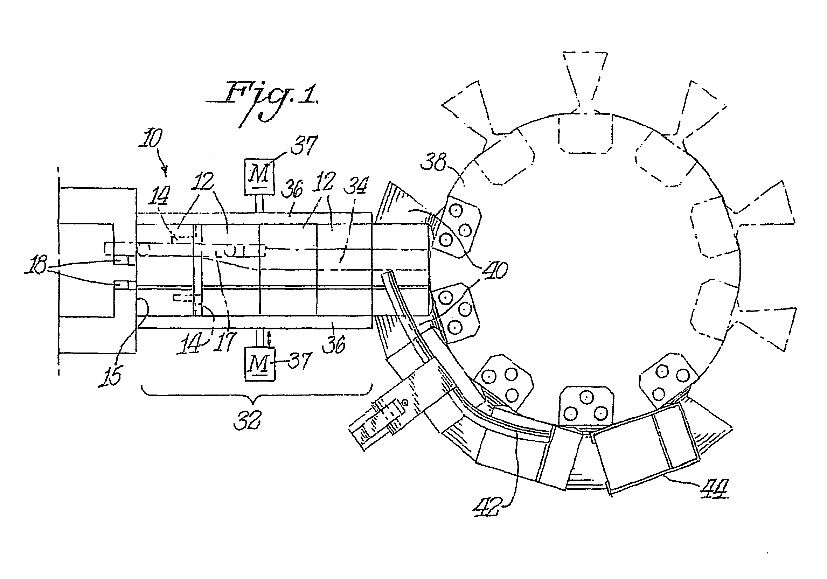

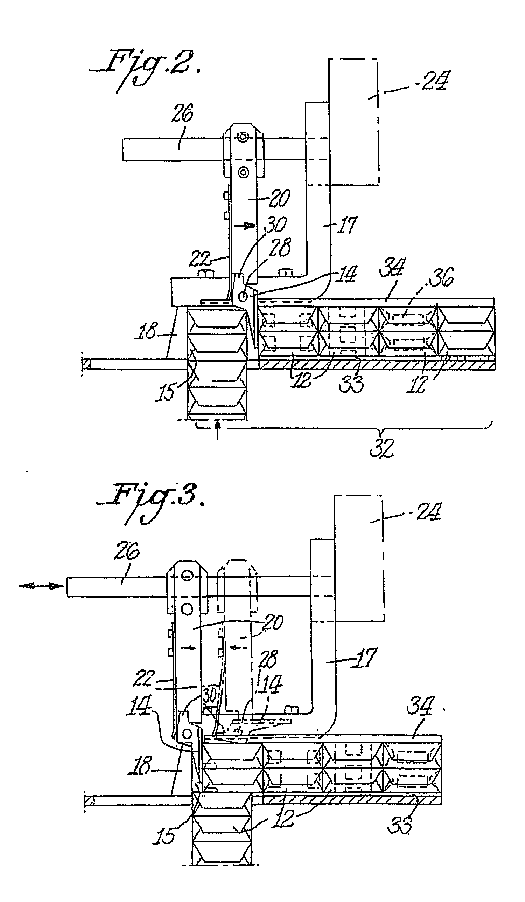

Referring with more particularity to the drawings, Figures **1-10** illustrate preferred embodiments of the invention. Figure **1** shows a plan view of a packaging apparatus **10** that could be used to package articles such as cigarette packs **12** using a pusher or lever arm **14** to load packs **12** from a loading passage **15** in heating area **32.** Figure **2** shows a profile view of the packaging apparatus **10.**

Packs **12** are wrapped and folded in a conventional manner (not shown) and loaded into the loading passage **15** according to any conventional manner known in the art. Wrapping **13,** shown in Fig. **12** can be any conventional material including polymer or cellophane, and may include a metalized surface.

As shown in Figure **2****,** packs **12** are fed through a loading passage **15** along a guide **18** into heating area **32.** The packs are guided into position in the heating area using guide **18,** an L-shaped stop **17** and lever arm **14.** Lever arm **14** may be connected along a pivotable axis **28** to a reciprocating arm **20** and automatically positioned using spring member **22.** Arm **20** may be clamped to moveable shaft **26** and connected to a machine **24** to move back and forth across the loading passage **15.** The shaft can be driven pneumatically, mechanically or by other conventionally known forces (not shown) or it can be stationary with the arm body being driven in a conventional manner along the shaft. As shown in Figs **2** and **3****,** the lever arm **14** is aligned to push the packs **12.**

As shown in Figure **3****,** the machine moves the arm body by extending the shaft **26.** The lower portion of lever arm **14** rotates about its axis **28** (shown in phantom) permitting the arm body **20** and lever arm **14** to pass over the packs **12** in loading passage **15.** The rotation of the lever arm **14** causes a lever arm tab **30** to place spring member into a stressed or biased condition (shown in phantom). The arm body **20** reaches a predetermined stopping point after passing over the packs **12,** such that the packs **12** no longer maintain the lever arm **14** in the pivoted position. The spring member **22,** which was previously placed in a stressed or biased condition by the influence of lever arm tab **28,** returns to its relaxed state. Thus, the lever arm **14** is pivoted back to its downward extending position so as to be aligned with the arm body **20** for pushing the packs **12.**

The spring member **22** could be comprised of spring steel or any shape memory material that can apply sufficient force to press lever arm tab **30** back into the recessed portion of arm body **20.** Alternatively, spring member **22** could be any conventional mechanism that would permit the arm tab to extend and would also press the arm tab **30** back into the recessed portion of arm body **20.**

After reaching the predetermined stopping point, the arm body **20** travels back to the position shown in Fig. **2****,** pushing packs **12** through the heating area **32** along surface **33,** which may be grooved. When the lever arm **14** pushes one set of packs **12** from a first stage of the heating area **32,** which overlays the loading passage **15,** to a second stage of the heating area **32,** another set of packs **12** are advanced through the loading passage **15** into heating area **32.** Figs. **2** and **3** illustrate the invention with lever arm **14** pushing two packs at a time. It is anticipated, however, that the apparatus and method could be modified to push any number of packs without straying from the invention.

The packs **12** are guided along surface **33** through the heating area **32** by a hold down bar **34.** While in the heating area, packs **12** are contacted by one or a pair of heater plates, such as the heater plate **36** shown in Figs. **1-4****.**

When the packs **12** are initially pushed up from the loading passage **15** into the heating area **32,** they can remain in that initial position or stage for any predetermined amount of time. It is anticipated, however, that the packs **12** will remain at each stage in the heating area long enough for the arm body to travel back and forth and slide another set of packs **12** from the first stage to the second stage.

Each set of packs **12** being pushed by the lever arm **14** will in turn push adjacent sets of packs **12** through multiple stages of the heating plate **36** and onto wheel **38** as shown in Fig. **1****.** The heater plates **36** can be connected to motors **37** which move the heater plates **36** in position to contact the packs **12** when the packs **12** are stationary and move the heater plates **36** away from packs **12** as the packs **12** are pushed through heating area **32.** Like shaft **26** and machine **24,** reciprocating motor **37** can be any conventional device for moving such as an arm, shaft or piston and may be powered by manual, pneumatic, electrical, or other mechanical forces.

Once on wheel **38,** packs are guided by pushers **40** and hold down guide **42.** Packs **12** can then be loaded into a discharge magazine **44** for final packaging.

A heating plate **36** according to the preferred embodiment of the invention will now be described in greater detail. Although it is anticipated that a heating plate **36** will be placed on both sides of the heating area **32** to contact both ends of the packs **12,** only one plate will be described for convenience. The heater plate can be comprised of any conventional material, though a material with relatively high thermal conductivity is preferred.

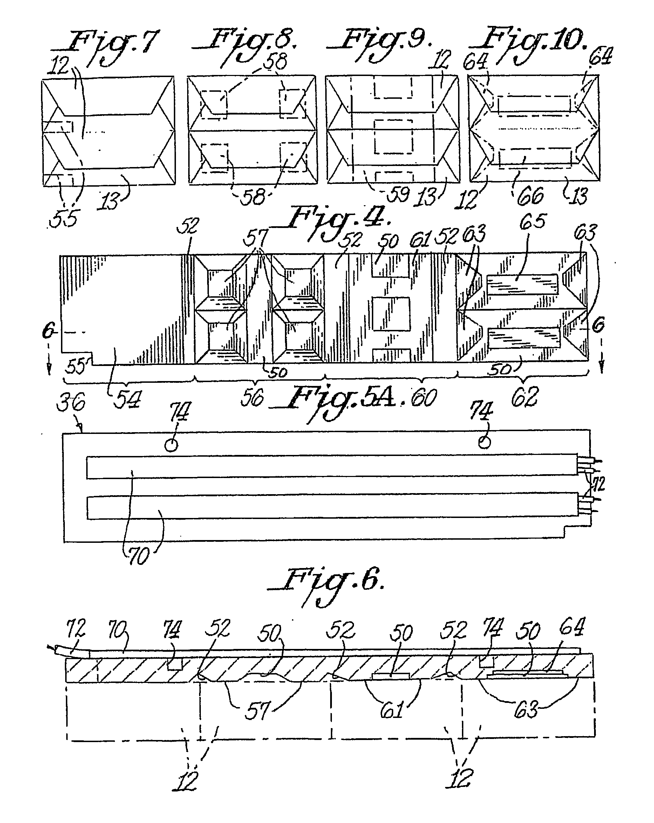

As shown in Fig **1****,** the packs can be placed in contact with a heater plate **36** while in the heating area **32.** Fig. **4** illustrates one exemplary embodiment of the design of heater plate **36.** Although the heater plate **36** may have any number of stages, Fig. **4** illustrates a heater plate **36** with four stages. Figs. **7-10** show in phantom where the heater plate **36** contacts the packs **12.**

Heater plate **36,** as shown in Fig. **4** may be contoured. The areas designated by numeral **50** can be contoured or flat and may all be within the same plane. Areas **52** are illustrated as linearly sloped, although they may be linear, contoured or may be stepped.

The first stage **54** on the heater plate **36** may be flat. The packs **12,** and more particularly the wrapping **13,** contact the flat face of the heater plate **36** as shown in Fig. **7****.** First stage **54** uniformly preheats the surface of the wrapping. The heater plate **36** can have a notch **55** for any reason such as for mounting the plate in the packaging apparatus **10** or for alignment.

The second stage **56** is a tacking stage. This stage typically involves activating adhesive on the wrapping. As shown in Fig. **8****,** the wrapping is contacted by members **57** at the points of contact **58** (shown in phantom in Figure 8), the points where the largest bulk of wrapping is folded upon itself. The wrapping can be five layers thick due to the manner in which the ends of the wrapping are folded.

The third stage **60** seals the wrapping **13.** As shown in Fig. **9****,** an "H" member **61,** so called because of its shape, contacts the packs **12** in area **59** (shown in phantom in Figure 9), along the folded edges of the wrapping **13.** The heating bonds the wrapping **13** to itself along the edges of contact, thus sealing the pack from the outside environment.

The fourth stage **62,** known as the beauty bar shrink stage, shrinks the wrapping **13** tight around the pack **12.** The heater plate has a surface with trapezoidal contact members **63,** a first recessed area **50** and a second recessed area **65.** As shown in Fig. **10****,** contact members **63** contact the packs **12** in areas **64** (shown in phantom in Figure **10**), along the folded edges of the wrapping **13** while the second recessed area aligns with packs **12** at area **66.** To better illustrate the different levels of the heater plate **36,** particularly with respect to the fourth stage **62,** Fig. **6** shows the heater block of Fig. **4** in profile along line **6-6.** Packs **12** are shown in phantom to further illustrate where the heater block **36** contacts the packs **12.** The generally concavely contoured shape of the beauty bar shrink stage **62** ensures proper heating to shrink the wrapping **13** of pack **12** and eliminates any wrinkles **80** experienced in the prior art as shown in Fig. **11****,** while avoiding melting the wrapping. Thus an improved wrapped package **12** is produced as shown in Fig. **12****.**

Heat is provided to the heater plate **36** by heater strips **70** on the rear side of plate **36** not facing the packs **12,** as shown in Figs. **5A** and **5b****.** Heater strips can be powered by a power source (not shown) through wires **72.** Figure **5A** shows the invention using two heater strips **70,** though any number of strips could be used to obtain an optimal of temperature control. For example, Fig. **5B** shows four heater strips **70.**

The heater plate can be maintained at one temperature of, for example, approximately 140 °C-170 °C, although a higher or lower temperature is envisioned depending on the wrapping material and other conditions. Additionally, the heater stages could be set at different temperatures. For example, the first and second stages could be maintained at a first temperature of, for example, 150 °C, while the third and forth stages could be set at a different temperature, for example, 170 °C.

Heat can be provided by electrical resistive or inductive heating, or in any other conventional manner. A thermocouple **74** can be inserted at any or all of stages to monitor the temperature. The heater plate **36** can be attached to the motor **37** by any means, for example by bolts or by any other conventional means of attaching or fixing including gluing, riveting or it may be formed integrally.

The foregoing description of the invention illustrates and describes the present invention. Additionally, the disclosure shows and describes only the preferred embodiments of the invention, but it is to be understood that the invention is capable of use in various other combinations, modifications, and environments and is capable of changes or modifications within the scope of the inventive concept as expressed herein, commensurate with the above teachings, and/or the skill or knowledge in the art of packaging and, more particularly cigarette wrapping.

The embodiments described hereinabove are further intended to explain best modes known of practicing the invention and to enable others skilled in the art to utilize the invention in such, or other, embodiments and with the various modifications required by the particular applications or uses of the invention. Accordingly, the description is not intended to limit the invention to the form disclosed herein. Also, it is intended that the appended claims be construed to include alternative embodiments.

## Claims

1. A heating plate (36) for packaging comprising:
a first stage (54) that comprises a flat surface for contacting wrapping (13) that is folded around packages (12) to preheat the wrapping (13) along folded edges;
a second stage (56) that comprises first recessed areas and first non-recessed areas, wherein the first non-recessed areas comprise four surfaces (57) for contacting the wrappings (13) of two packages (12) at points where the largest bulk of the wrappings (13) are folded upon themselves to tack the wrappings (13);
a third stage (60) that comprises second recessed areas and second non-recessed areas, wherein the second non-recessed areas comprise two contiguous H-shaped surfaces (61) for contacting the wrappings (13) of two packages (12) along folded edges of the wrappings (13) to seal the wrappings (13); and
a fourth rectangular shaped stage (62) that comprises third recessed areas (50, 65) and third non-recessed areas (63), wherein the third non-recessed areas comprise four trapezoidal shaped surfaces for contacting the wrappings (13) of two packages (12) along folded edges of the wrappings (13) to shrink the wrappings (13).

2. A heating plate (36) according to claim 1, wherein heat is supplied to the heating plate (36) using multiple independent heating devices (70).

3. A heating plate (36) according to claim 2, wherein heat is supplied to the heating plate (36) by two independent heating devices (70).

4. A heating plate (36) according to claim 3, wherein the heating devices (70) are maintained at a temperature of between about 140°C and 170°C.

5. A heating plate (36) according to claim 1, wherein the third recessed areas (50, 65) in the fourth rectangular shaped stage (62) have a first recessed portion (50) and a second recessed portion (65), wherein the second recessed portion (65) is recessed further than the first recessed portion (50) and, wherein the second recessed portion (65) is rectangular shaped.

6. A heating plate (36) according to claim 1, wherein the second stage (56) activates adhesive along edges of wrappings (13).

7. A heating plate (36) according to claim 1, wherein the first stage (54), the first non-recessed areas, the second non-recessed areas, and the third non-recessed (50, 65) areas all lie in the same plane.

8. A heating apparatus for use in cigarette packaging comprising:
a heating area (32) comprising a multiple stage heating plate (36) according to any of claims 1 to 7;
a first reciprocating device (14) that advances a set of cigarette packs (12) linearly through the heating area (32) and along multiple stages of the multiple stage heating plate (36); and
a second reciprocating device (37) that moves the multiple stage heating plate (36) inwardly to contact the set of cigarette packs (12) and outwardly to allow the set of cigarettes packs (12) to be moved through the heating area (32).

9. A heating apparatus according to claim 8, wherein the set of cigarette packs (12) contacts multiple areas of the multiple stage heating plate (36) as the set of cigarette packs (12) is linearly advanced through the heating area (32).

10. A heating apparatus according to claim 8 further comprising a loading passage (15) through which sets of cigarette packs (12) are advanced into the heating area (32).

11. A method of sealing and shrinking a wrapping material (13) around packages (12) comprising:
contacting the wrapping material (13) with a first heating stage (54) to preheat the wrapping material (13) along folded edges;
contacting the wrapping material (13) with a second heating stage (56) to tack the wrapping material (13);
contacting the wrapping material (13) with a third heating stage (60) to seal the wrapping material (13) around the packages (12); and
contacting the wrapping material (13) with a fourth heating stage (62) to shrink the wrapping material (13),
wherein the four heating stages (54, 56, 60, 62) are one heating plate (36).

## Patentansprüche

1. Heizplatte (36) zum Verpacken, die Folgendes umfasst:
eine erste Stufe (54), die eine flache Fläche umfasst, um Verpackungsmaterial (13), das um Verpackungen (12) gefaltet wird, zu berühren, um das Verpackungsmaterial (13) längs gefalteter Kanten vorzuheizen,
eine zweite Stufe (56), die erste eingezogene Bereiche und erste nicht eingezogene Bereiche umfasst, wobei die ersten nicht eingezogenen Bereiche vier Flächen (57) umfassen, um die Verpackungsmaterialien (13) von zwei Verpackungen (12) an Punkten, wo die größte Menge der Verpackungsmaterialien (13) übereinander gefaltet werden, zu berühren, um die Verpackungsmaterialien (13) anzuheften,
eine dritte Stufe (60), die zweite eingezogene Bereiche und zweite nicht eingezogene Bereiche umfasst, wobei die zweiten nicht eingezogenen Bereiche zwei aneinanderstoßende H-förmige Flächen (61) umfassen, um die Verpackungsmaterialien (13) von zwei Verpackungen (12) längs gefalteter Kanten der Verpackungsmaterialien (13) zu berühren, um die Verpackungsmaterial (13) zu versiegeln, und
eine vierte, rechteckig geformte Stufe (62), die dritte eingezogene Bereiche (50, 65) und dritte nicht eingezogene Bereiche (63) umfasst, wobei die dritten nicht eingezogenen Bereiche vier trapezartig geformte Flächen umfassen, um die Verpackungsmaterialien (13) von zwei Verpackungen (12) längs gefalteter Kanten der Verpackungsmaterialien (13) zu berühren, um die Verpackungsmaterialien (13) zu schrumpfen.

2. Heizplatte (36) nach Anspruch 1, wobei die Wärme der Heizplatte (36) unter Verwendung mehrerer unabhängiger Heizvorrichtungen (70) zugeführt wird.

3. Heizplatte (36) nach Anspruch 2, wobei die Wärme der Heizplatte (36) durch zwei unabhängige Heizvorrichtungen (70) zugeführt wird.

4. Heizplatte (36) nach Anspruch 3, wobei die Heizvorrichtungen (70) bei einer Temperatur zwischen etwa 140°C und 170°C gehalten werden.

5. Heizplatte (36) nach Anspruch 1, wobei die dritten eingezogenen Bereiche (50, 65) in der vierten, rechteckig geformten Stufe (62) einen ersten eingezogenen Abschnitt (50) und einen zweiten eingezogenen Abschnitt (65) haben, wobei der zweite eingezogene Abschnitt (65) weiter eingezogen ist als der erste eingezogene Abschnitt (50) und wobei der zweite eingezogene Abschnitt (65) rechteckig geformt ist.

6. Heizplatte (36) nach Anspruch 1, wobei die zweite Stufe (56) einen Klebstoff längs von Kanten von Verpackungsmaterialien (13) aktiviert.

7. Heizplatte (36) nach Anspruch 1, wobei die erste Stufe (54), die ersten nicht eingezogenen Bereiche, die zweiten nicht eingezogenen Bereiche und die dritten nicht eingezogenen Bereiche (50, 65) alle in der gleichen Ebene liegen.

8. Heizvorrichtung zur Verwendung beim Zigarettenverpacken, die Folgendes umfasst:
einen Heizbereich (32), der eine mehrstufige Heizplatte (36) nach einem der Ansprüche 1 bis 7 umfasst,
eine erste hin- und hergehende Einrichtung (14), die einen Satz von Zigarettenpackungen (12) linear durch den Heizbereich (32) und längs mehrerer Stufen der mehrstufigen Heizplatte (36) vorschiebt, und
eine zweite hin- und hergehende Einrichtung (37), welche die mehrstufige Heizplatte (36) nach innen, um den Satz von Zigarettenpackungen (12) zu berühren, und nach außen, um zu ermöglichen, dass der Satz von Zigarettenpackungen (12) durch den Heizbereich (32) bewegt wird, bewegt.

9. Heizvorrichtung nach Anspruch 8, wobei der Satz von Zigarettenpackungen (12) mehrere Bereiche der mehrstufigen Heizplatte (36) berührt, wenn der Satz von Zigarettenpackungen (12) linear durch den Heizbereich (32) vorgeschoben wird.

10. Heizvorrichtung nach Anspruch 8, die ferner einen Ladedurchgang (15) umfasst, durch den Sätze von Zigarettenpackungen (12) in den Heizbereich (32) vorgeschoben werden.

11. Verfahren zum Versiegeln und Schrumpfen eines Verpackungsmaterials (13) um Verpackungen (12), wobei das Verfahren Folgendes umfasst:
Berühren des Verpackungsmaterials (13) mit einer ersten Heizstufe (54), um das Verpackungsmaterial (13) längs gefalteter Kanten vorzuheizen,
Berühren des Verpackungsmaterials (13) mit einer zweiten Heizstufe (58), um das Verpackungsmaterial (13) anzuheften,
Berühren des Verpackungsmaterials (13) mit einer dritten Heizstufe (60), um das Verpackungsmaterial (13) um die Verpackungen (12) zu versiegeln, und
Berühren des Verpackungsmaterials (13) mit einer vierten Heizstufe (62), um das Verpackungsmaterial (13) zu schrumpfen,
wobei sich die vier Heizstufen (54, 56, 60, 62) auf einer Heizplatte (36) befinden.

## Revendications

1. Plaque chauffante (36) pour le conditionnement comportant :
un premier étage (54) qui comporte une surface plate destinée à venir en contact avec un emballage (13) entourant des paquets (12) pour préchauffer l'emballage (13) le long de bords pliés ;
un deuxième étage (56) qui comporte des premières zones en retrait et des premières zones non en retrait, les premières zones non en retrait comportant quatre surfaces (57) destinées à venir en contact avec les emballages (13) de deux paquets (12) à des endroits où la plus grosse partie des emballages (13) est repliée sur elle-même pour fixer par collage les emballages (13) ;
un troisième étage (60) qui comporte des deuxièmes zones en retrait et des deuxièmes zones non en retrait, les deuxièmes zones non en retrait comportant deux surfaces contiguës en H (61) destinées à venir en contact avec les emballages (13) de deux paquets (12) le long des bords pliés des emballages (13) afin de souder les emballages (13) ; et
un quatrième étage de forme rectangulaire (62) qui comporte des troisièmes zones en retrait (50, 65) et des troisièmes zones non en retrait (63), les troisièmes zones non en retrait comportant quatre surfaces de forme trapézoïdale destinées à venir en contact avec les emballages (13) des deux paquets (12) le long des bords pliés des emballages (13) pour faire rétrécir les emballages (13).

2. Plaque chauffante (36) selon la revendication 1, dans laquelle la chaleur est fournie à la plaque chauffante (36) en utilisant plusieurs dispositifs chauffants indépendants (70).

3. Plaque chauffante (36) selon la revendication 2, dans laquelle la chaleur est fournie à la plaque chauffante (36) par deux dispositifs chauffants indépendants (70).

4. Plaque chauffante (36) selon la revendication 3, dans laquelle les dispositifs chauffants (70) sont maintenus à une température se situant entre environ 140 et 170 °C.

5. Plaque chauffante (36) selon la revendication 1, dans laquelle les troisièmes zones en retrait (50, 65) dans le quatrième étage de forme rectangulaire (62) ont une première portion en retrait (50) et une deuxième portion en retrait (65), la deuxième portion en retrait (65) étant plus en retrait que la première portion en retrait (50), et dans laquelle la deuxième portion en retrait (65) une forme rectangulaire.

6. Plaque chauffante (36) selon la revendication 1, dans laquelle le deuxième étage (56) active un adhésif le long des bords des emballages (13).

7. Plaque chauffante (36) selon la revendication 1, dans laquelle le premier étage (54), les premières zones non en retrait, les deuxièmes zones non en retrait, et les troisièmes zones non en retrait (50, 65) sont tous dans le même plan.

8. Appareil de chauffage pour le conditionnement de paquets de cigarettes comportant :
une zone chauffante (32) comportant une plaque chauffante à plusieurs étages (36) selon l'une quelconque des revendications 1 à 7 ;
un premier dispositif à mouvement alternatif (14) qui fait avancer un ensemble de paquets de cigarettes (12) de manière linéaire dans la zone chauffante (32) et le long desdits plusieurs étages de la plaque chauffante à plusieurs étages (36) ; et
un deuxième dispositif à mouvement alternatif (37) qui déplace la plaque chauffante à plusieurs étages (36) vers l'intérieur pour qu'elle vienne en contact avec l'ensemble des paquets de cigarettes (12) et vers l'extérieur pour permettre à l'ensemble des paquets de cigarettes (12) d'être déplacé dans la zone chauffante (32).

9. Appareil chauffant selon la revendication 8, dans lequel l'ensemble des paquets de cigarettes (12) vient en contact avec plusieurs zones de la plaque chauffante à plusieurs étages (36) au fur et à mesure que l'ensemble des paquets de cigarettes (12) est avancé de manière linéaire dans la zone chauffante (32).

10. Appareil chauffant selon la revendication 8 comportant en outre un passage de chargement (15) à travers lequel des ensembles de paquets de cigarettes (12) sont avancés dans la zone chauffante (32).

11. Procédé de soudage et de rétrécissement d'un matériau d'emballage (13) autour de paquets (12) comprenant:
faire venir en contact le matériau d'emballage (13) et le premier étage chauffant (54) pour préchauffer le matériau d'emballage (13) le long de bords pliés ;
faire venir en contact le matériau d'emballage (13) et un deuxième étage chauffant (56) pour fixer par collage le matériau d'emballage (13) ;
faire venir en contact le matériau d'emballage (13) et un troisième étage chauffant (60) pour souder le matériau d'emballage (13) autour des paquets (12) ; et
faire venir en contact le matériau d'emballage (13) et un quatrième étage chauffant (62) pour faire rétrécir le matériau d'emballage (13),
dans lequel les quatre étages chauffants (54, 56, 60, 62) sont une plaque chauffante (36).
